**Europäisches Patentamt**

**European Patent Office**

**Office européen des brevets**

(19)

(11) Numéro de publication : **0 179 690**
**B1**

# (12) FASCICULE DE BREVET EUROPÉEN

(45) Date de publication du fascicule du brevet :
23.03.88

(21) Numéro de dépôt : 85401846.2

(22) Date de dépôt : 23.09.85

(51) Int. Cl.⁴ : **B 62 D    1/18**

(54) **Dispositif de réglage de colonne de direction pour véhicule automobile.**

(30) Priorité : 01.10.84 FR 8415068

(43) Date de publication de la demande :
30.04.86 Bulletin 86/18

(45) Mention de la délivrance du brevet :
23.03.88 Bulletin 88/12

(84) Etats contractants désignés :
**DE GB IT NL SE**

(56) Documents cités :
**WO-A-82 /008 06**
**DE-A- 3 138 764**
**FR-A- 1 513 351**
**FR-A- 1 513 849**
**GB-A- 2 065 578**

(73) Titulaire : **NACAM Société dite:**
**Route de Blois**
**F-41100 Vendome (FR)**

(72) Inventeur : **Haldric, Bernard**
**15 rue Charles Lindbergh**
**F-41100 Vendome (FR)**
Inventeur : **Benedi, Grégorio**
**1 rue Maréchal Rochambeau**
**F-41100 Vendome (FR)**
Inventeur : **Pretot, Daniel**
**2 rue Henri Dunant**
**F-41100 Vendome (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention est relative aux colonnes de direction pour véhicules automobiles et se rapporte plus particulièrement aux colonnes de direction réglables en inclinaison et en profondeur.

Certains nouveaux modèles de véhicules automobiles comportant une colonne de direction réglable permettant de régler la position du volant en inclinaison et axialement pour l'adapter à la taille du conducteur.

Les dispositifs existants permettent le réglage de la position du volant dans la plupart des cas par rapport à la verticale.

D'autres dispositifs connus montés sur des véhicules de haut de gamme permettent un réglage par rapport à la verticale et un réglage axial. Ces dispositifs sont d'un prix de revient élevé.

Pour le réglage, on utilise le plus souvent le déplacement du tube support de colonne à l'intérieur d'une chape fixée à la structure du véhicule. Le blocage en position est réalisé au moyen d'une vis et d'un écrou qui serrent les ailes de la chape contre le tube support.

Des systèmes plus sophistiqués permettent à l'aide d'un secteur denté, de placer la colonne de direction dans une position angulaire déterminée en engageant un cliquet dans l'une des dents du système.

D'autres systèmes encore appelés à mémoire permettent de relever la colonne à une position maximale en hauteur et de la remettre à sa position initiale, obtenue par un réglage préalable, sans avoir à rechercher cette position.

Une solution de colonne de direction réglable est décrite par exemple dans la demande de brevet allemand DE 3 138 764, publiée avant examen et correspondant au préambule de la revendication 1 ; elle ne donne pas entière satisfaction. Le dispositif décrit dans ce document comprend un support de colonne déplaçable dans une ferrure rendue solidaire de la structure du véhicule et des moyens de blocage en position de ce support par rapport à la ferrure. Ces moyens de blocage sont constitués par une pointe de sélection mobile qui est commandée par un axe coulissant dans l'un des support ou ferrure et qui est destinée à s'engager dans l'un des trous d'un ensemble qui sont ménagés dans une pièce solidaire dans l'autre des support ou ferrure.

La présente invention vise à réaliser un dispositif de réglage d'une colonne de direction qui allie une relative simplicité de conception à un prix de revient modéré et à des caractéristiques techniques combinant celles des dispositifs connus.

Cet objectif est atteint grâce aux caractéristiques définies dans la revendication 1.

L'invention sera mieux comprise à l'aide de la description qui va suivre, donnée uniquement à titre d'exemple et faite en se référant aux dessins annexés, sur lesquels :

- la Fig. 1 est une vue en coupe transversale d'une colonne de direction pour véhicules automobiles équipes d'un dispositif de réglage suivant l'invention ;

- la Fig. 2 est une vue en élévation de gauche de la colonne de direction de la Fig. 1 ;

- la Fig. 3 est une vue avec arrachement partiel, en élévation, de gauche, à plus petite échelle de la colonne de direction de la Fig. 1 ;

- la Fig. 4 est une vue en coupe à plus grande échelle du mécanisme de verrouillage et de déverrouillage du dispositif de réglage suivant l'invention ;

- la Fig. 5 est une coupe partielle suivant la ligne 5-5 de la Fig. 4 ;

- la Fig. 6 est une vue en coupe correspondant a celle de la Fig. 1 montrant la colonne en position de relèvement maximal ;

- la Fig. 7 est une vue partielle en coupe montrant le dispositif de réglage en position déverrouillée ; et

- la Fig. 8 est une vue en coupe transversale d'une colonne de direction munie d'un dispositif de réglage réalisé selon une variante de l'invention.

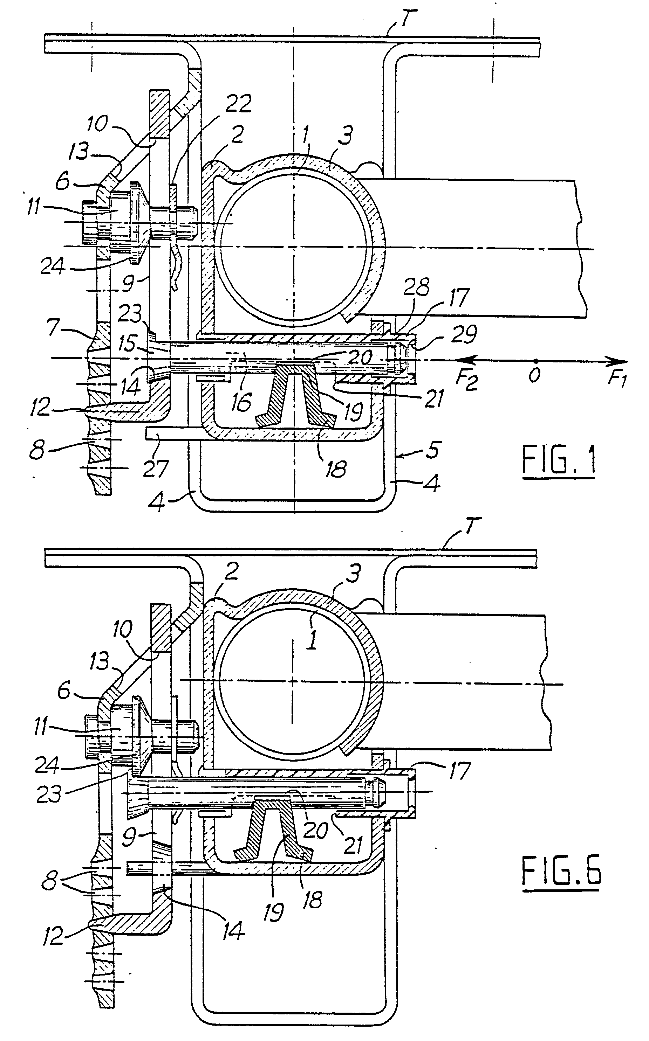

Sur la Fig. 1, on a représenté un tube 1 support de colonne de direction qui est rendu solidaire d'un boîtier parallélépipédique 2 par exemple par sertissage ou soudage de ce boîtier autour du tube 1. Le boîtier 2 est déplaçable dans un plan vertical entre deux ailes 4 d'une ferrure en forme de chape 5 rendue solidaire du tablier et d'un véhicule (non représenté).

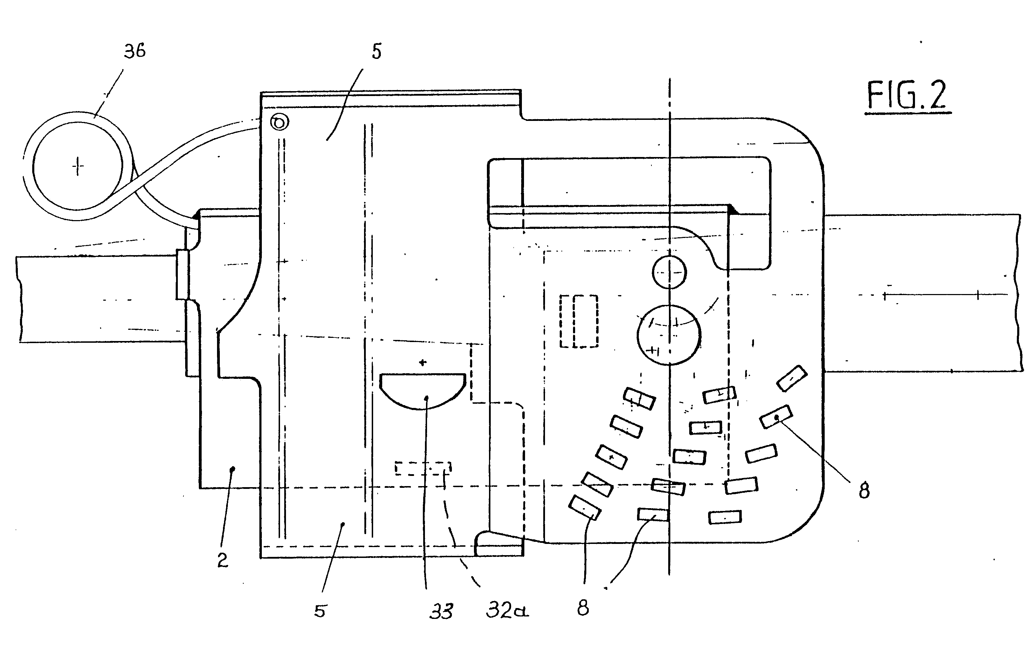

L'une des ailes 4 de la chape 5 est prolongée par une plaque 6 pliée de manière à s'en écarter et qui comporte une partie 7 parallèle à la chape. Dans la partie parallèle 7 sont ménagés des trous 8 disposés en groupes sur cette plaque comme le montre la Fig. 2.

Un organe de sélection 9 comporte une fente 10 dans laquelle est engagé un axe de guidage 11 fixé à la plaque 6. L'organe 9 comporte à une de ses extrémités une pointe 12 pliée à angle droit engagée dans l'un des trous 8 de la plaque 6. Cette pointe peut également être rendue solidaire de l'organe 9 par exemple par sertissage ou soudage. A son extrémité opposée à la pointe 12 le levier 9 traverse une fente 13 ménagée dans la partie inclinée de la plaque 6.

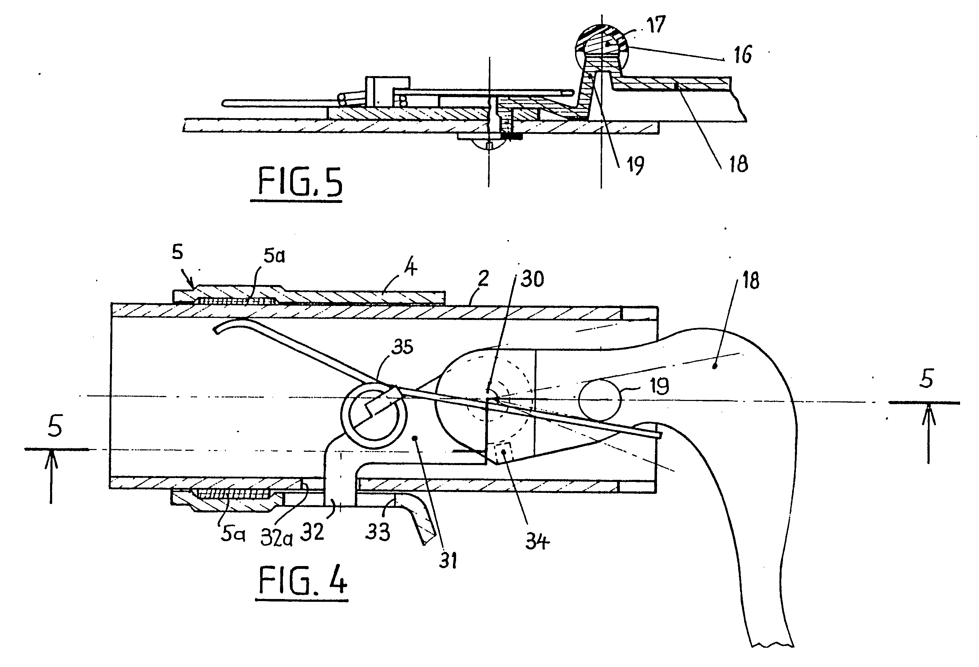

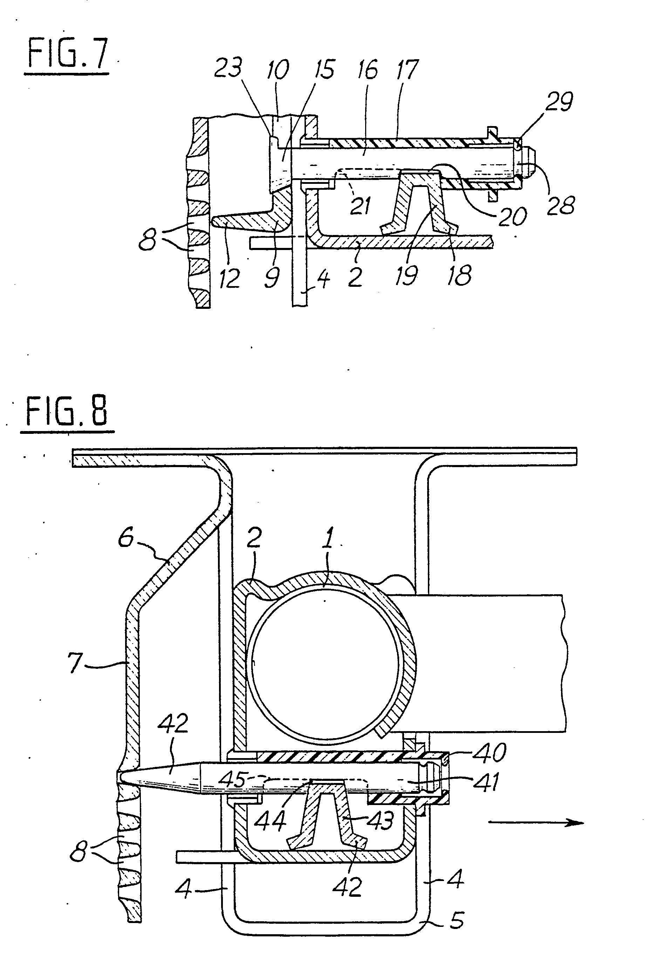

A l'extrémité de la fente 10 proche de la pointe 12 est ménagé un logement tronconique 14 (Fig. 6) dans lequel est logée une extrémité conique 15 formant tête d'un axe 16 monté déplaçable à coulissement dans un manchon 17 fixé dans le boîtier 2 et réalisé en matière plastique pour éviter toute source de bruit. La tête 15 peut présenter une autre forme quelconque et le logement 14 peut avoir une forme complémentaire à celle de la tête. Le déplacement de l'axe 16 est assuré par un premier levier 18 (Fig. 4) pourvu d'un bossage latéral 19 engagé dans une rainure 20 de l'axe 16 à travers une fente longitudinale 21 du manchon 17. Le montage du levier 18 sera décrit plus en détail dans la suite.

Ainsi qu'on peut le constater, l'axe 16 est solidaire du boîtier support de colonne 2. Par conséquent, à chaque trou 8 de la plaque 6 solidaire de la chape fixe 5 correspond une position du boîtier support 2 et par conséquent, du volant.

A l'extrémité de l'axe 11 faisant saillie au-delà de la fente 10 de l'organe 9 est monté un ressort à lame 22 destiné à rappeler l'organe de sélection 9 vers la plaque 6.

L'extrémité tronconique 15 de la tige 16 comporte une saillie 23 destinée à coopérer avec une collerette 24 prévue sur l'axe 11 pour assurer le maintien de la tige 16 dans une position dégagée par rapport à l'organe de sélection 9 au cours d'une opération de relèvement de la colonne de direction qui sera décrite par la suite en référence à la Fig. 6.

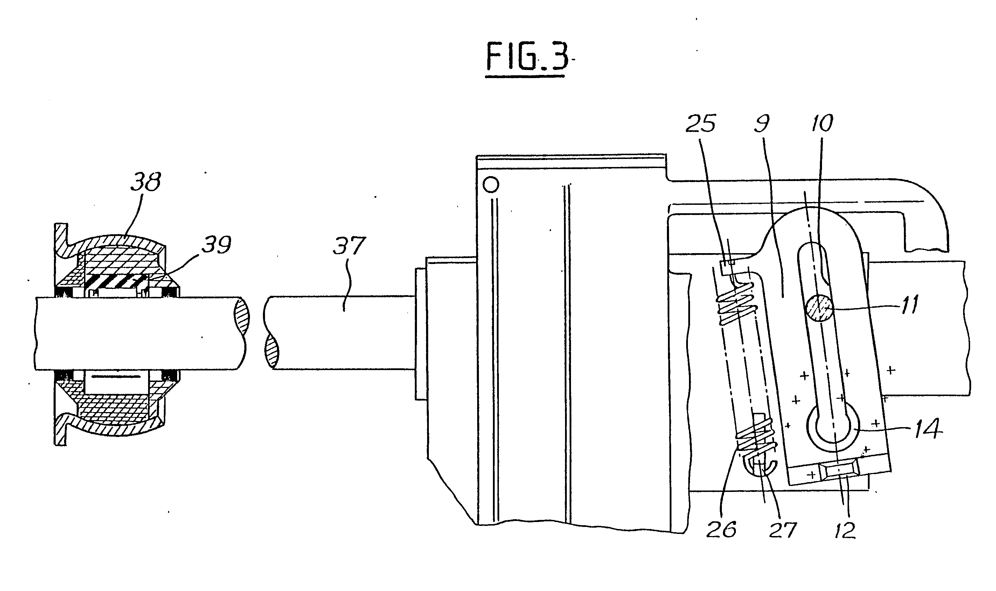

Ainsi que le montre la Fig. 3, le levier 9 comporte une patte latérale 25 à laquelle est fixée une extrémité d'un ressort de rappel 26 dont l'autre extrémité est fixée à une patte 27 solidaire du boîtier support 2.

L'axe 16 est déplaçable au moyen du levier 18 dans le sens des flèches F1 et F2 de la Fig. 1. Il comporte à son extrémité opposée à la portion tronconique 15 une gorge 28 destinée à coopérer avec un bourrelet 29 prévu à l'extrémité correspondante du manchon 17 en vue de maintenir l'axe 16 et par conséquent l'organe de sélection 9 en position dégagée par rapport aux trous 8.

Ainsi qu'on peut le voir aux Fig. 4 et 5, le levier 18 d'actionnement de la tige 16 est monté à rotation autour d'un axe 30 monté dans le boîtier support 2. Entre ce support et les ailes 4 de la chape 5 sont interposées des plaques de frottement 5a en matière plastique pour supprimer tout jeu. A l'extrémité du levier 18 intérieure au boîtier, est articulé un levier supplémentaire de verrouillage 31 qui comporte un bec 32 destiné à être engagé, à travers une lumière 32a du boîtier 2, dans une fente 33 ménagée dans la chape fixe 5 (Fig. 2) pour assurer le verrouillage de l'ensemble en position haute correspondant à la position de relèvement maximum de la colonne de direction. Le levier 18 comporte en outre à proximité de son axe d'articulation 30 un ergot 34 destiné à provoquer le retrait du bec 32 du levier 31 hors de la fente 33 de la chape 5 à l'encontre de l'action d'un ressort de rappel 35 porté par le levier supplémentaire 31 dont les extrémités prennent appui d'une part à l'intérieur du boîtier 2 et d'autre part contre le bossage 19 du levier 18. Le ressort 35 assure en outre la fonction de ressort de rappel pour le levier 18 lorsque celui-ci est déplacé dans le sens correspondant au déplacement de l'axe 16 suivant la flèche $F_2$.

En revenant à nouveau à la Fig. 2, on voit qu'un ressort 36 disposé entre la chape 5 et le boîtier support 2 est destiné à compenser le poids de l'ensemble constitué par la colonne de direction ou le volant. On voit enfin sur la Fig. 3 que la colonne de direction 37 est en outre supportée en un point déterminé de sa longueur par une rotule 38 destinée à permettre le déplacement de l'ensemble qui vient d'être décrit.

La translation de la colonne de direction 37 est assurée par un palier à aiguilles 39 contenu dans la rotule précitée.

Le fonctionnement de l'ensemble qui vient d'être décrit est le suivant.

Le dispositif est représenté sur la Fig. 1 dans une position dans laquelle le boîtier support 2 et par conséquent le tube 1 de la colonne de direction occupe une position déterminée par l'engagement de la pointe 12 de l'organe de sélection 9 dans le trou intermédiaire 8 de l'un de groupes de trous représentés à la Fig. 2. Chaque trou 8 d'un groupe correspond à une position du support 2 en inclinaison et les divers groupes de trous déterminent autant de positions de la colonne en profondeur. En déplaçant à l'aide du levier 18 l'axe 16 dans le sens de la flèche F1, la pointe 12 de l'organe 9 est dégagée du trou 8. Il est alors possible de déplacer le boîtier support 2 et par conséquent le tube 1 de la colonne de direction en agissant sur le volant (non représenté) de manière à présenter la pointe 12 de l'organe 9 devant un autre trou 8 de la plaque 6 et de choisir ainsi une autre position de la colonne de direction et par conséquent du volant. Comme représenté à la Fig. 7, l'organe de sélection 9 est maintenu en position de retrait par rapport au trou 8 par l'engagement du bourrelet 29 du manchon 17 dans la gorge 28 de l'axe 16.

La nouvelle position de la colonne de direction ayant été ainsi choisie, on dégage l'axe 16 du bourrelet 29 du manchon 17 qui est engagé dans la rainure 28 en exerçant une impulsion sur le levier 18 dans le sens de la flèche $F_2$ et le ressort 22 ramène alors l'organe 9 et l'axe 16 dans la position représentée à la Fig. 1 pour provoquer l'engagement de la pointe 12 de l'organe de sélection 9 dans le trou 8 correspondant.

Lorsqu'un trou 8 de la plaque 6 a été sélectionné et la pointe 12 de l'organe 9 a été engagée dans ce trou, le déplacement de l'axe 16 dans le sens de la flèche F2, toujours à l'aide du levier 18, provoque le dégagement de l'extrémité tronconique 15 de l'axe 16 hors du logement tronconique correspondant 14 prévu à l'extrémité de la fente 10 de l'organe 9 et de ce fait la libération du boîtier support 2 par rapport à l'organe de sélection 9 qui reste verrouillé par rapport à la plaque 6 de la chape 5. Il est alors possible de déplacer l'axe 16 dans la fente 10 de l'organe 9 jusqu'à ce que sa saillie 23 vienne s'engager sur la collerette 24 de l'axe 11, maintenant ainsi l'axe 16 en position sortie, et interdisant tout mouvement suivant la flèche $F_1$ et de ce fait toute sortie indésirable de la pointe 12 hors du trou 8 sélectionné. L'ensemble du dispositif de réglage se trouve alors dans la position représentée à la Fig. 6.

Le ressort 26 représenté à la Fig. 3 assure le déplacement de l'axe 16 vers l'axe 11 contre lequel il vient ainsi en butée.

On voit donc que le déplacement de l'axe 16 dans le sens de la flèche $F_2$ permet de mettre le support 2 en position de hauteur maximale. Ceci permet de dégager le volant vers le haut pour faciliter la sortie du conducteur hors du véhicule.

Lorsque la colonne est dans la position de hauteur maximale précitée. Le levier supplémentaire 31 lié au levier d'actionnement 18 est engagé dans la fente 35 prévue dans la chape 5 (Fig. 2) et maintient le support 2 dans cette position.

Un actionnement du levier 18 dans le sens provoquant le déplacement de l'axe 16 suivant la flèche F2, l'ergot 34 prévu sur le levier 18 exerce un effort sur le levier supplémentaire 31 et provoque le dégagement de son bec 32 hors de la fente 35 de la chape 5, ce qui libère à nouveau le boîtier support 2 et permet au tube 1 de la colonne de direction d'être ramené dans sa position initiale. Cette opération est effectuée simplement en agissant sur le volant, ce qui provoque le déplacement du boîtier 2 vers le bas de la Fig. 1 et le coulissement de l'axe 16 dans la fente 10 de l'organe de sélection 9 avec tout d'abord la libération de la saillie 23 par la collerette 24 de l'axe 11 puis, en fin de course, par l'introduction de l'extrémité tronconique 15 de l'axe 16 dans le logement tronconique 14 de la fente 10.

On voit donc que la colonne de direction est ainsi ramenée exactement dans la même position qu'elle occupait avant son déplacement dans sa position de hauteur maximale.

L'ensemble constitué par l'axe 16 déplaçable dans le sens de la flèche F2, son extrémité tronconique 15 qui permet de verrouiller cet axe sur l'organe de sélection 9 de la position de la colonne de direction ou de le libérer vis-à-vis de cet organe, constitue un dispositif de « mémoire », permettant après que la colonne de direction ait occupé une position de hauteur maximale, de ramener cette colonne dans la position de réglage initial sans avoir à rechercher à nouveau cette position.

Sur la Fig. 8, on a représenté un dispositif de réglage pour colonne de direction qui diffère de celui qui vient d'être décrit en référence aux Fig. 1 à 7 en ce qu'il ne comporte pas de dispositif de mémoire. Ce dispositif de réglage de conception simplifiée comporte, comme le dispositif précédent, un boîtier support 2 rendu solidaire du tube 1 de colonne de direction et monté déplaçable entre les ailes 4 d'une chape 5. L'une des ailes 4 de la chape 5 est prolongée par une plaque 6 dont une partie 7 parallèle aux ailes de la chape est pourvue de trous 8 analogues à ceux représentés aux Fig. 1 et 2. Dans le support 2 est monté à coulissement par l'intermédiaire d'un manchon 40, un axe 41 comportant une pointe 42 destinée à être engagée dans un des trous 8 de la plaque 6 afin de déterminer la position du support 2 du tube 1 de colonne de direction. L'axe 41 est déplaçable par un levier 42 analogue au levier 18 du mode de réalisation précédent et pourvu comme ce levier d'un bossage 43 engagé dans une rainure 44 de l'axe 41 et traversant une fente 45 du manchon 40.

Ce dispositif fonctionne de la même manière que celui décrit en référence aux Fig. 1 à 7 à l'exception du fait qu'il ne comporte pas de fonction mémoire.

Le dispositif de réglage pour colonne de direction qui vient d'être décrit, tout en étant d'une construction relativement simple, permet d'assurer l'ensemble des fonctions requises par les dispositifs de réglage les plus perfectionnés de la technique antérieure.

**Revendications**

1. Dispositif de réglage de colonne de direction pour véhicule automobile comprenant un support de colonne (2) déplaçable dans une ferrure (5) rendue solidaire de la coque du véhicule, et des moyens de blocage en position dudit support (2) par rapport à la ferrure qui sont constitués par une pointe (12 ; 42) de sélection de position déplaçable par un axe (16 ; 41) monté à coulissement dans l'un de ces support (2) - ferrure (5) et destinée à être engagée dans un trou (8) d'un ensemble de trous ménagés dans une pièce (6, 7) solidaire de l'autre de ces ferrure (5) - support (2) caractérisé en ce que l'axe (16 ; 41) est monté à coulissement dans ce support (2) et la pièce (6, 7) est montée solidaire de la ferrure (5) et en ce que l'ensemble de trous est constitué de plusieurs groupes de trous, chaque trou (8) d'un groupe correspondant à une position du support (2) et par conséquent de la colonne de direction du véhicule en inclinaison, les divers groupes déterminant autant de positions de la colonne en profondeur, c'est-à-dire le long de son axe.

2. Dispositif de réglage suivant la revendication 1, caractérisé en ce que ledit axe (16 ; 41) de déplacement de ladite pointe (12 ; 42) est actionnée par un premier levier (18 ; 42) monté oscillant dans le support (2) et comprenant un bossage latéral (19 ; 43) engagé dans une rainure (20 ; 44) ménagée dans ledit axe.

3. Dispositif suivant l'une des revendications 1 et 2, caractérisé en ce que ladite pointe (12) est portée à une extrémité d'un organe de sélection (9) pourvu d'une fente (10) pour le déplacement dudit axe (16) entre une position de réglage choisie par l'engagement de la pointe (12) dans un trou (8) correspondant de la pièce (6, 7) solidaire de ladite ferrure (5) et une position de hauteur maximale, l'extrémité de celui-ci coopérant avec ladite fente étant constituée par une tête (15) engagée dans un logement (14) ménagé à l'extrémité de la fente (10) proche de ladite pointe (12), un axe (11) de guidage dudit organe (9) étant fixé à la pièce (6, 7) solidaire de la ferrure (5), des moyens élastiques (22) montés sur ledit axe de guidage (11) assurant le maintien de la pointe (12) dans un trou (8) correspondant à la position choisie. la fente (10) de l'organe de sélection (9) et la tête (15) de l'axe (16) ainsi que le logement (14) ménagé dans ladite fente constituant un dispositif à mémoire permettant de déplacer le support de colonne entre ladite position de réglage choisie et la position de hauteur maximale puis de la ramener dans la position de réglage.

4. Dispositif suivant la revendication 3, caractérisé en ce que ladite tête (15) de l'axe (16) est pourvue d'une saillie (23) destinée à coopérer avec une collerette (24) prévue sur ledit axe de guidage (11) pour assurer le maintien dudit axe (16) en position dégagée par rapport l'organe de sélection (9) lorsque ledit axe (16) est en butée contre l'axe de guidage (11), dans la position de hauteur maximale du support (2) de colonne de direction.

5. Dispositif suivant l'une des revendications 2 à 4, caractérisé en ce qu'il comporte en outre un dispositif (31, 32, 33, 34, 35) de verrouillage du support (2) de colonne de direction en position de hauteur maximale.

6. Dispositif suivant la revendication 5, caractérisé en ce que le dispositif de verrouillage comporte un levier supplémentaire (31) articulé à l'extrémité du premier levier (18) d'actionnement dudit axe (16), le levier supplémentaire comprenant un bec (32) destiné à être engagé sous l'action d'un ressort (35) dans une fente (33) ménagée dans une paroi latérale (4) de ladite ferrure (5) lorsque le support (2) se trouve dans la position de hauteur maximale, ainsi qu'un ergot (34) prévu sur ledit levier (18) et destiné à provoquer sous l'action dudit levier (18), le dégagement dudit bec (32) hors de ladite fente (33) de ladite ferrure en vue d'assurer la libération du support (2) par rapport à la ferrure (5).

7. Dispositif suivant l'une des revendications 1 à 6, caractérisé en ce que l'axe (16) est monté à coulissement dans ledit support (2) par l'intermédiaire d'un manchon (17) pourvu d'une fente (21) pour le passage du bossage (19) du levier (18) d'actionnement dudit axe, celui-ci étant déplaçable dans deux sens (F1, F2) de part et d'autre de la position de l'organe de sélection (9) dans laquelle la pointe (12) dudit organe est engagée dans l'un des trous (8) de la pièce (6, 7) solidaire de la ferrure (5), des moyens (28, 29) de blocage de l'axe (16) dans une position de retrait de la pointe (12) de l'organe de sélection (9) par rapport aux trous (8) de ladite pièce (6, 7) étant prévus sur ledit axe (16) et sur ledit manchon (17).

8. Dispositif suivant l'une des revendications 1 à 7, caractérisé en ce que ladite ferrure (5) est constituée par une chape fixée au tablier du véhicule, le support (2) de colonne de direction étant déplaçable entre les ailes (4) de la chape (5), l'une des ailes étant prolongée par une plaque (6, 7) dans laquelle sont ménagés lesdits groupes de trous (8) destinés à recevoir la pointe (12 ; 42) de sélection de position.

9. Dispositif suivant l'une des revendications 7 et 8, caractérisé en ce que ledit manchon (17) dans lequel est monté ledit axe (16) est réalisé en matière plastique.

**Claims**

1. Steering column adjusting device for an automotive vehicle, comprising a column support (2) which is displaceable within a mounting (5) which is made rigid with the body of the vehicle, and means for locking said support (2) in position relative to the mounting, which consist of a position selecting pin (12 ; 42) which is displaceable by means of a spindle (16 ; 41) slidingly mounted in either the support (2) or the mounting (5) and adapted to engage in a hole (8) or a number of holes provided in a part (6, 7) rigid with the mounting (5) or support (2), respectively, characterised in that the spindle (16 ; 41) is slidingly mounted in this support (2) and the part (6, 7) is mounted rigidly with the mounting (5), and in that the set of holes consists of several groups of holes, each hole (8) of a group corresponding to a position of the support (2) and consequently of the inclination of the steering column of the vehicle, the several groups defining as many positions in depth of the column, i. e. along its axis.

2. Adjusting device as claimed in claim 1, characterised in that the displacement spindle (16 ; 41) for the pin (12 ; 42) is operated by a first lever (18 ; 42) rockingly mounted in the support (2) and comprising a lateral boss (19 ; 43) engaging in a groove (20 ; 44) provided in said spindle.

3. Device as claimed in one of claims 1 and 2, characterised in that the pin (12) is carried at one end of a selecting member (9) provided with a slot (10) for the displacement of said spindle (16) between a position of adjustment selected by engagement of the pin (12) in a corresponding hole (8) in the part (6, 7) rigid with said mounting (5) and a position of maximum height, its end which cooperates with said slot consisting of a head (15) which engages in a recess (14) provided at the end of the slot (10) close to said pin (12), a guide spindle (11) for said member (9) being fixed to the part (6, 7) which is rigid with the mounting (5), elastic means (22) mounted on the guide spindle (11) ensuring that the pin (12) is held in a hole (8) corresponding to the position selected, whilst the slot (10) of the selecting member (9) and the head (15) of the spindle (16) as well as the recess (14) provided in said slot form a memory device which makes it possible to move the column support between the selected position of adjustment and the position of maximum height and then to return it to the position of adjustment.

4. Device as claimed in claim 3, characterised in that the head (15) of the spindle (16) is provided with a projection (23) adapted to cooperate with a flange (24) provided on the guide spindle (11) in order to ensure that the spindle (16) is held in the disengaged position relative to the selecting member (9) when the spindle (16) is abutting on the guide spindle (11), in the position of maximum height of the support (2) for the steering column.

5. Device as claimed in one of claims 2 to 4, characterised in that it further comprises a device (31, 32, 33, 34, 35) for locking the steering column support (2) in the position of maximum height.

6. Device as claimed in claim 5, characterised in that the locking device, comprises an additional lever (31) articulated at the end of the first actuating lever (18) for the spindle (16), the additional lever comprising a lip (32) adapted to engage, under the effect of a sping (35), in a slot (33) provided in a side wall (4) of the mounting (5) when the support (2) is in the position of maximum height, and a lug (34) provided on said lever (18) and adapted to cause, under the effect of said lever (18), disengagement of said lip (32) from said slot (33) of said mounting so as to free the support (2) relative to the mounting (5).

7. Device as claimed in one of claims 1 to 6, characterised in that the spindle (16) is slidingly mounted in the support (2) by means of a sleeve (17) provided with a slot (21) to allow movement of the boss (19) of the lever (18) for actuating said spindle, the latter being movable in two directions (F1, F2) on both sides of the position of the selecting member (9) in which the pin (12) of said member engages in one of the holes (8) of the part (6, 7) which is rigid with the mounting (5), whilst means (28, 29) for blocking the spindle (16) in a position of retraction of the pin (12) of the selecting member (9) relative to the holes (8) in said part (6, 7) are provided on the spindle (16) and on the sleeve (17).

8. Device as claimed in one of claims 1 to 7, characterised in that the mounting (5) consists of a strap fixed to the bulkhead of the vehicle, the support (2) for the steering column being displaceable between the arms (4) of the strap (5), one of the arms being extended by a plate (6, 7) in which are formed the sets of holes (8) adapted to receive the position selecting pin (12 ; 42).

9. Device as claimed in one of claims 7 and 8, characterised in that the sleeve (17) In which the spindle (16) is mounted is made of plastics.

**Patentansprüche**

1. Lenksäuleneinstellvorrichtung für Kraftfahrzeuge, mit einem Lenksäulenhalter (2), welcher in einem mit dem Fahrzeugkörper festverbundenen Beschlag (5) versetzbar ist, und Mitteln zur lagemäßigen Festlegung des Halters (2) bezüglich des Beschlages, welche durch eine Lageauswahlspitze (12 ; 42) gebildet sind, die durch eine gleitend im Halter (2) oder Beschlag (5) angebrachte Achse (16 ; 41) versetzbar und für ein Eingreifen in ein Loch (8) einer Gesamtheit von Löchern bestimmt ist, die in einem mit dem anderen der Elemente Beschlag (5) und Halter (2) festverbundenen Teil (6, 7) ausgebildet sind, dadurch gekennzeichnet, daß die Achse (16 ; 41) in dem Halter (2) gleitend angebracht und das Teil (6, 7) mit dem Beschlag (5) festverbunden angebracht ist, und daß die Gesamtheit von Löchern durch mehrere Gruppen von Löchern gebildet ist, wobei jedes Loch (8) einer Gruppe einer Stellung des Halters (2) und folglich der Lenksäule des Fahrzeugs in Neigungsrichtung entspricht, wobei die verschiedenen Gruppen ebensoviele Stellungen der Lenksäule in der Höhe, d. h. längs ihrer Achse, bestimmen.

2. Einstellvorrichtung nach Anspruch 1, dadurch gekennzeichnet, daß die Achse (16 ; 41) zur Versetzung der Spitze (12 ; 42) durch einen ersten Hebel (18 ; 42) betätigt wird, welcher im Halter (2) schwenkbar angebracht ist und einen seitlichen Buckel (19 ; 43) aufweist, welcher in eine in der Achse ausgebildete Nut (20 ; 44) eingreift.

3. Vorrichtung nach einem der Ansprüche 1 und 2, dadurch gekennzeichnet, daß die Spitze (12) am Ende eines Auswahlglieds (9) sitzt, welches mit einem Schlitz (10) für das Versetzen der Achse (16) zwischen einer Einstellage, die durch das Einlegen der Spitze (12) in ein entsprechendes Loch (8) des mit dem Beschlag (5) festverbundenen Teils (6, 7) bestimmt ist, und einer Lage maximaler Höhe versehen ist, wobei das mit dem Schlitz zusammenwirkende Ende derselben durch einen Kopf (15) gebildet ist, welcher in einen in dem der Spitze (12) nahen Ende des Schlitzes (10) ausgebildeten Sitz (14) eingreift, wobei eine Führungsachse (11) für das Glied (9) an dem mit dem Beschlag (5) festverbundenen Teil (6, 7) befestigt ist, wobei auf der Führungsachse (11) angebrachte elastische Mittel (22) das Halten der Spitze (12) in einem der gewählten Lage entsprechenden Loch (8) gewährleisten, wobei der Schlitz (10) des Auswahlglieds (9) und der Kopf (15) der Achse (16) sowie der in dem Schlitz ausgebildete Sitz (14) eine Speichervorrichtung bilden, welche ein Versetzen des Lenksäulenhalters zwischen der gewählten Einstellage und der Lage maximaler Höhe und nachfolgend das Rückführen in die Einstellage gestatten.

4. Vorrichtung nach Anspruch 3, dadurch gekennzeichnet, daß der Kopf (15) der Achse (16) mit einem Vorsprung (23) versehen ist, welcher für ein Zusammenwirken mit einem auf der Führungsachse (11) vorgesehenen Kragen (24) bestimmt ist, um zu gewährleisten, daß die Achse (16) in Löslage bezüglich des Auswahlelements (9) gehalten wird, wenn die Achse (16) gegen die Führungsachse (11) in der Lage maximaler Höhe des Lenksäulenhalters (2) anliegt.

5. Vorrichtung nach einem der Ansprüche 2 bis 4, dadurch gekennzeichnet, daß sie ferner eine Vorrichtung (31, 32, 33, 34, 35) zur Verriegelung des Lenksäulenhalters (2) in der Lage maximaler Höhe aufweist.

6. Vorrichtung nach Anspruch 5, dadurch gekennzeichnet, daß die Verriegelungsvorrichtung einen Zusatzhebel (31), welcher am Ende des ersten Hebels (18) zur Betätigung der Achse (16) angelenkt ist, wobei der Zusatzhebel eine Nase (32) umfaßt, welche für ein unter der Wirkung einer Feder (35) erfolgendes Eingreifen in einen in einer Seitenwand (4) des Beschlages (5) ausgebildeten Schlitz (33), wenn sich der Halter (2) in der Lage maximaler Höhe befindet, bestimmt ist, sowie einen Vorsprung (34) aufweist, welcher auf dem Hebel (18) vorgesehen und dazu bestimmt ist, unter der Wirkung dieses Hebels (18) das Lösen der Nase (32) aus dem Schlitz (33) des Beschlages im Hinblick auf eine Gewährleistung der Freigabe des Halters (2) bezüglich des Beschlages (5) hervorzurufen.

7. Vorrichtung nach einem der Ansprüche 1 bis 6, dadurch gekennzeichnet, daß die Achse (16) über eine Muffe (17), welche mit einem Schlitz (21) für den Durchtritt des Buckels (19) des Betätigungshebels (18) für die Achse versehen ist, im Halter (2) gleitend angebracht ist, wobei die Achse in zwei Richtungen (F1, F2) nach beiden Seiten von der Stellung des Auswahlglieds (9), in welchem die Spitze (12) dieses Glieds in einem der Löcher (8) des mit dem Beschlag (5) festverbundenen Teils (6, 7) im Eingriff ist, verschiebbar ist, wobei Mittel (28, 29) zum Blockieren der Achse (16) in einer Rückzugstellung der Spitze (12) des Auswahlglieds (9) bezüglich der Löcher (8) des Teils (6, 7) auf der Achse (16) und auf der Muffe (17) vorgesehen sind.

8. Vorrichtung nach einem der Ansprüche 1 bis 7, dadurch gekennzeichnet, daß der Beschlag (5) durch einen an der Frontwand des Fahrzeugs befestigten Gabelbügel gebildet ist, wobei der Lenksäulenhalter (2) zwischen den Schenkeln (4) des Gabelbügels (5) versetzbar ist, wobei der eine der Schenkel sich in einer Platte (6, 7) fortsetzt, in welcher die Gruppen der zur Aufnahme der Lageauswahlspitze (12 ; 42) bestimmten Löcher (8) ausgebildet sind.

9. Vorrichtung nach einem der Ansprüche 7 und 8, dadurch gekennzeichnet, daß die Muffe (17), in der die Achse (16) angebracht ist, aus Kunststoff besteht.

FIG. 1

FIG. 6

FIG.2

# FIG.3

0 179 690

FIG. 5

FIG. 4

0 179 690

FIG.7

FIG.8